# EUROPÄISCHE PATENTSCHRIFT

(11) **EP 3 924 245 B1**
(45) Veröffentlichungstag und Bekanntmachung des Hinweises auf die Patenterteilung: **29.03.2023**
(21) Anmeldenummer: 19783506.9
(22) Anmeldetag: 04.10.2019
(51) Int. Cl.: B63B 21/00, G02B 6/44, B63B 21/50, D07B 1/14, G01L 5/04, G01L 5/10, G01N 33/18

(54) **ANKERSEILSYSTEM FÜR EINE OFFSHORE-VORRICHTUNG**
GUY ROPE SYSTEM FOR AN OFFSHORE INSTALLATION
SYSTÈME DE CÂBLE D'ANCRAGE POUR UN DISPOSITIF EN MER

(30) Priorität: 11.02.2019 DE 102019103305
(43) Veröffentlichungstag der Anmeldung: 22.12.2021
(73) Patentinhaber: RWE Renewables GmbH, 45141 Essen (DE)
(72) Erfinder: JAHN, Christian, 25451 Quickborn (DE); OBERMEYER, Sebastian, 21147 Hamburg (DE)
(74) Vertreter: Cohausz & Florack
(86) Internationale Anmeldenummer: PCT/EP2019/076936
(87) Internationale Veröffentlichungsnummer: WO 2020/164761

(56) Entgegenhaltungen:
- WO-A1-01/98743
- WO-A1-2016/063904
- WO-A1-2016/114671
- GB-A- 2 402 944
- US-A1- 2005 226 584
- US-A1- 2015 088 346
- "MONEY FOR NEW ROPE - BRIDON PLC", STEEL TIMES, FUEL & METALLURGICAL JOURNALS LTD. LONDON, GB, Bd. 225, Nr. 5, 1. Mai 1997 (1997-05-01), Seite 194/195, XP000692298, ISSN: 0039-095X

## Beschreibung

Die Anmeldung betrifft ein Ankerseilsystem für eine Offshore-Vorrichtung, insbesondere zum Befestigen einer Offshore-Vorrichtung an einem Unterwasserboden. Darüber hinaus betrifft die Anmeldung ein Ankerseilüberwachungssystem, ein Verfahren zum Betreiben eines Ankerseilüberwachungssystem, ein Computerprogramm und eine Verwendung.

Zur Bereitstellung von elektrischer Energie aus so genannten erneuerbaren Energiequellen werden vermehrt Windenergiesysteme mit mindestens einer Windkraftanlage eingesetzt. Eine Windkraftanlage ist insbesondere zum Wandeln der kinetischen Windenergie in elektrische Energie eingerichtet. Um den Energieertrag bei derartigen Systemen zu steigern, werden Windenergiesysteme an Standorten mit einer hohen Windwahrscheinlichkeit angeordnet. Insbesondere Offshore-Standorte zeichnen sich üblicherweise durch relativ kontinuierliche Windbedingungen und hohe durchschnittliche Windgeschwindigkeiten aus, so dass vermehrt so genannte Offshore-Windenergiesysteme bzw. Offshore-Windparks errichtet werden.

In der Regel weist ein Offshore-Windenergiesystem bzw. -park eine Vielzahl an Offshore-Vorrichtungen auf, wie eine Vielzahl von Offshore-Windkraftanlagen und mindestens eine Offshore-Substation, über die das Offshore-Windenergiesystem elektrisch beispielsweise mit einer Onshore-Substation oder einer weiteren Offshore-Substation bzw. Offshore-Converterstation verbunden ist. Eine Onshore-Substation wiederum kann mit einem öffentlichen Stromnetz verbunden sein. Zum Übertragen von elektrischer Energie zwischen zwei Offshore-Vorrichtungen oder einer Offshore-Vorrichtung und einer Onshore-Vorrichtung werden Offshore-Energiekabel in Form von Seekabeln verlegt.

Während es bisher bei Offshore-Windenergiesystemen üblich war, diese durch eine Gründungsstruktur (z.B. Monopile-, Tripod-, Tripile- oder Jacket-Gründungen) auf dem Unterwasserboden, insbesondere einem Meeresboden, zu verankern, gibt es vermehrt Überlegungen dazu, schwimmende Offshore-Vorrichtungen, beispielsweise schwimmende Offshore-Windenergievorrichtungen, zu installieren, um insbesondere in Gebieten mit einer großen Wassertiefe, beispielsweise von mehr als 400 m, Offshore-Windenergiesysteme bereitzustellen.

Um die beschriebenen schwimmenden (aber während des Betriebs stationären) Offshore-Windenergievorrichtungen, aber auch andere Offshore-Vorrichtungen, zu installieren, ist es bekannt, diese mit Ankersystemen an dem Unterwasserboden zu befestigen, insbesondere zu verankern. Derzeit werden hierfür typischerweise aus einer Vielzahl von miteinander verbundenen Stahlringen gebildete Ankerketten eingesetzt.

Ankerseilsysteme sind aus WO2016/063904A1, WO01/98743A1 oder US2005226584 bekannt.

Da derartige Ankerketten relativ schwer sind sowie die Herstellungs- und Verlegungskosten insbesondere mit steigender Wassertiefe deutlich steigen, wird angenommenen, dass insbesondere in großen Tiefen als Alternative zu den bekannten Ankerkettensysteme vermehrt so genannten Ankerseilsysteme (manchmal auch kurz mit Ankerseile bezeichnet) eingesetzt werden. Ein Ankerseilsystem weist in der Regel zumindest ein oder mehrere Ankerseile (z.B. aus Metall) und eine das mindestens eine Ankerseil umgebende Ummantelung auf. Ankerseilsysteme können im Vergleich zu Ankerkettensysteme, insbesondere bei Wassertiefen größer 400 m, einfacher installiert und zudem mit geringeren Kosten produziert werden.

Problematisch bei über derartige Ankerseilsysteme verankerten Offshore-Vorrichtungen ist jedoch, dass eine Beschädigung eines Ankerseilsystems, insbesondere ein Durchreißen eines Ankerseilsystems, also ein so genannter Seilbruch, zu erheblichen Beeinträchtigungen des Betriebs der Offshore-Vorrichtung führt. Insbesondere bei einer schwimmenden Offshore-Windenergievorrichtung kann dies die Stromproduktion für eine erhebliche Zeit stilllegen.

Daher liegt der Anmeldung die Aufgabe zugrunde, ein Ankerseilsystem für Offshore-Vorrichtungen zur Verfügung zu stellen, welches das Risiko eines Seilbruchs zumindest reduziert.

Die Aufgabe wird gelöst durch ein Ankerseilsystem für eine Offshore-Vorrichtung, insbesondere zum Befestigen einer Offshore-Vorrichtung an einem Unterwasserboden nach Anspruch 1. Das Ankerseilsystem umfasst mindestens ein von mindestens einer Ummantelung umschlossenes Ankerseil. Das Ankerseilsystem umfasst mindestens einen durch mindestens einen Lichtwellenleiter gebildeten Zustandssensor.

Im Gegensatz zum Stand der Technik wird anmeldungsgemäß ein Ankerseilsystem bereitgestellt, bei dem das Risiko eines Seilbruchs zumindest reduziert ist, indem ein Zustandssensor in dem Ankerseilsystem vorgesehen ist, insbesondere in dem Ankerseilsystem integriert ist. Bereits kleine Beschädigungen an einem Ankerseilsystem können frühzeitig mit einem geringen Aufwand erkannt werden, so dass frühzeitig Maßnahme zur Beseitigung der Beeinträchtigung veranlasst werden können. Ein Produktionsstillstand einer Offshore-Windenergievorrichtung aufgrund eines Seilbruchs kann verhindert, zumindest minimiert, werden.

Das anmeldungsgemäße Ankerseilsystem dient insbesondere dem Befestigen einer Offshore-Vorrichtung, insbesondere einer schwimmenden (jedoch vorzugsweise im Betrieb stationären) Offshore-Vorrichtung. Eine weitere Anwendung eines anmeldungsgemäßen Ankerseilsystems ist die Anbindung mindestens eines weiteren (unter der Wasseroberfläche liegenden) Strukturelements an die Offshore-Vorrichtung, insbesondere den Schwimmkörper der Offshore-Vorrichtung. Eine schwimmende Offshore-Vorrichtung kann insbesondere über mindestens einen Schwimmkörper verfügen. Vorzugsweise handelt es sich bei der schwimmenden Offshore-Vorrichtung um eine schwimmende Offshore-Windenergievorrichtung, insbesondere eine Offshore-Windkraftanlage oder eine Offshore-Umspannstation.

Eine derartige Offshore-Vorrichtung kann über mindestens ein anmeldungsgemäßes Ankerseilsystem, insbesondere einer Mehrzahl von Ankerseilsystemen, an einem Unterwasserboden (z.B. Meeresboden) befestigt, insbesondere verankert werden. Dies erlaubt es insbesondere, schwimmende Offshore-Windenergievorrichtungen in Gebieten mit einer großen Wassertiefe, beispielsweise von mehr als 400 m zu installieren. Es versteht sich, dass das Ankerseilsystem auch in geringeren Wassertiefen einsetzbar ist.

Unter einem anmeldungsgemäßen Ankerseilsystem ist vorliegend ein längliches (insbesondere rohrförmiges) Element zu verstehen, welches zumindest teilweise aus mindestens einer Naturfaser und/oder Kunstfaser und/oder mindestens einem Draht bzw. Drahtseil gebildet ist. Insbesondere weist ein Ankerseilsystem keine Kettenelemente auf.

Vorliegend weist das (seilförmige) Ankerseilsystem mindestens ein Ankerseil auf, welches aus Metall, insbesondere Stahl, und/oder Kunststoff, insbesondere mindestens einem Faserverbundwerkstoff, gebildet ist. Vorzugsweise können zwei oder mehr Ankerseile vorgesehen sein. Insbesondere können zwei oder mehr Ankerseile miteinander verdrillt sein. Durch das mindestens eine Ankerseil kann insbesondere die mechanische Befestigung der Offshore-Vorrichtung an dem Unterseeboden sichergestellt werden.

Zum Schutz des mindestens einen Ankerseils weist das Ankerseilsystem eine (äußere) Ummantelung auf. Die Ummantelung umgibt bzw. umschließt das mindestens eine Ankerseil in radialer Richtung. Vorzugsweise kann die Ummantelung aus Kunststoff, insbesondere mindestens einem Faserverbundwerkstoff, gebildet sein.

Um frühzeitig auch geringe Beschädigungen (z.B. Mikrorisse) zu detektieren und somit dem Risiko eines Seilbruchs vorzubeugen, wird anmeldungsgemäß vorgeschlagen, ein Ankerseilsystem mit einem Zustandssensor in Form eines Lichtwellenleiters auszustatten. Der Lichtwellenleiter ist insbesondere als linienförmiger Zustandssensor ausgebildet. Der Lichtwellenleiter weist mindestens eine optische Faser auf.

Der Lichtwellenleiter ist insbesondere eingerichtet, Ankerseilsystemparameter zu erfassen, die zumindest ein Indiz über den mechanischen bzw. strukturellen Zustand des Ankerseilsystems sind. Beispielsweise können Vibrationen (oder Schallemissionen) des Ankerseilsystems durch den Zustandssensor erfasst werden. Diese können dann ausgewertet werden, um Rückschlüsse auf den mechanischen bzw. strukturellen Zustand des Ankerseilsystems zu gewinnen.

Der Lichtwellenleiter ist insbesondere in dem Ankerseilsystem integriert, also von der (äußeren) Ummantelung (in radialer Richtung) umgeben bzw. umschlossen und kann sich vorzugsweise (in Längsrichtung des Ankerseilsystem gesehen) entlang des im Wesentlichen gesamten Ankerseilsystems erstrecken. Anders ausgedrückt kann, gemäß einer Ausführungsform des anmeldungsgemäßen Ankerseilsystems, sich der mindestens eine Lichtwellenleiter vorzugsweise im Wesentlichen von einem ersten Ende des Ankerseilsystems, welches an der Offshore-Vorrichtung, insbesondere dem Schwimmkörper der Offshore-Vorrichtung, befestigt sein kann, bis zu dem anderen Ende des Ankerseilsystems erstrecken, wobei das andere Ende mit einem Verankerungselement (z.B. ein Fundament) verbunden oder dieses aufweisen kann. Hierdurch kann im Wesentlichen das gesamte Ankerseilsystem überwacht werden. Der mindestens eine Lichtwellenleiter kann als Zustandssensor eines (optischen) Ankerseilüberwachungssystems dienen, und vorzugsweis auf Basis der optischen Zeitbereichsreflektometrie, auch bekannt unter der englischen Bezeichnung Optical-Time-Domain-Reflectometry (OTDR) betrieben werden. Insbesondere erlaubt ein derartiger Lichtwellenleiter eine ortsabhängige Überwachung, so dass neben einer evtl. Beschädigung, wie ein Mikroriss, auch der Ort des Mikrorisses an dem Ankerseilsystem bestimmt werden kann.

Gemäß einer weiteren Ausführungsform des anmeldungsgemäßen Ankerseilsystems kann der Lichtwellenleiter in dem Ankerseilsystem (unmittelbar) benachbart zu dem (mindestens einen) Ankerseil angeordnet sein. Beispielsweise kann der Lichtwellenleiter an zumindest einem Ankerseil anliegen, dieses also zumindest abschnittsweise kontaktieren. Hierdurch kann die Überwachung des mindestens einen (mechanisch) tragenden Ankerseils verbessert werden.

Ein Ankerseilsystem kann, in herkömmlicher Weise, eine im Wesentlichen kreisförmige Querschnittsfläche aufweisen. Gemäß einer besonders bevorzugten Ausführungsform kann der mindestens eine Lichtwellenleiter in der Mitte der im Wesentlichen kreisförmigen Querschnittsfläche des Ankerseilsystems verlaufen. Um den die Längsachse bildendenden Lichtwellenleiter können dann vorzugsweise eine Mehrzahl von Ankerseilen angeordnet, insbesondere gewickelt, beispielsweise verdrillt, sein. Durch die Anordnung des Lichtwellenleiters in der Mitte der im Wesentlichen kreisförmigen Querschnittsfläche des Ankerseilsystems kann insbesondere ein (im Wesentlichen) symmetrischer Aufbau des Ankerseilsystems bereitgestellt werden. Zudem kann die Überwachung der bevorzugt Mehrzahl von um den Lichtwellenleiter gewickelten Ankerseilen noch weiter verbessert werden.

Wie bereits beschrieben wurde, kann der mindestens eine Lichtwellenleiter mindestens eine optische Faser umfassen, vorzugsweise mindestens zwei optische Fasern. Erfindungsgemäß ist die mindestens eine optische Faser in einem Rohrelement des Lichtwellenleiters angeordnet.

Anders ausgedrückt kann die mindestens eine optische Faser von mindestens einer Schutzschicht, insbesondere einem Schutzrohr, (in radialer Richtung) umgeben sein. Die mindestens eine optische Faser kann eine Monomodefaser oder eine Multimodefaser sein.

Bei einem bevorzugten Ausführungsbeispiel des anmeldungsgemäßen Ankerseilsystems kann das Rohrelement aus einem Kunststoffmaterial und/oder einem Glasfasermaterial und/oder einem Kohlefasermaterial und/oder dem Material gebildet sein, aus dem das mindestens eine Ankerseil gebildet ist. Eine Reduzierung der durch das mindestens eine Ankerseil auf die mindestens eine optische Faser ausgeübten Kräfte kann erreicht werden.

Auch kann insbesondere ein Rohr aus Glas als Rohrelement für die mindestens eine optische Faser eingesetzt werden.

Besonders bevorzugt kann das Rohrelement aus dem Kunststoffmaterial High Density Polyethylen (HDPE) sein. Es hat sich gezeigt, dass ein entsprechendes Kunststoffmaterial die Anforderungen eines Ankerseilsystems besonders gut erfüllt.

Erfindungsgemäß umfasst der Lichtwellenleiter eine das Rohrelement umschließende Armierungsschicht.

Die Armierungsschicht kann vorzugsweise aus einer Mehrzahl von Armierungsseilen gebildet sein. Diese Armierungsseile werden aus einem Faserverbundwerkstoff gebildet.

Alternativ oder zusätzlich ist zumindest ein Teil der Armierungsseile aus Metall, insbesondere Stahl, gebildet.

Der Schutz der mindestens einen optischen Faser des Lichtwellenleiters kann weiter verbessert werden.

Gemäß einer besonders bevorzugten Ausführungsform des anmeldungsgemäßen Ankerseilsystems kann in dem Rohrelement des Lichtwellenleiters ein viskoelastisches Fluid angeordnet sein. Anders ausgedrückt kann die mindestens eine optische Faser in einem mit einem viskoelastisches Fluid gefüllten Rohrelement verlaufen. Der Schutz der mindestens einen optischen Faser kann noch weiter verbessert werden. Vorzugsweise kann als viskoelastisches Fluid ein Gelmaterial bzw. eine gelartige Masse eingesetzt sein. Besonders geeignet ist ein Silikongel.

Darüber hinaus kann gemäß einer weiteren Ausführungsform des anmeldungsgemäßen Ankerseilsystems vorgesehen sein, dass zwischen dem mindestens einen Ankerseil, insbesondere der Vielzahl von Ankerseilen, und der (äußeren) Ummantelung mindestens eine Barriereschutzschicht angeordnet ist, insbesondere eine Sandschutzschicht. Die Ankerseile werden hierdurch noch besser geschützt.

Es versteht sich, dass bei anderen Ausführungsformen ein Ankerseilsystem weitere Elemente umfassen kann, wie Füllmaterialien, eine sich an die Armierungsschicht anschließende Kunststoffschicht, die insbesondere vorgesehen sein kann, die unter der Kunststoffschicht liegenden Komponenten zusammen zu halten, etc..

Wie bereits beschrieben wurde, kann zumindest ein Ankerseil aus einem Faserverbundwerkstoff gebildet sein. Bevorzugt kann die Mehrzahl von Ankerseilen zumindest teilweise aus Metall, insbesondere Stahl, und zumindest teilweise aus einem Faserverbundwerkstoff gebildet sein. Entsprechendes gilt vorzugsweise für eine Mehrzahl von Armierungsseilen. Hierbei können unterschiedliche Faserverbundwerkstoffe eingesetzt werden. Bevorzugt kann als Faserverbundwerkstoff Kohlefaser verwendet werden, um ein besonders widerstandsfähiges Ankerseilsystem bereitzustellen. Es versteht sich, dass bei anderen Varianten auch zusätzlich oder alternativ andere Faserverbundwerkstoffe verwendet werden können, beispielweise Glasfaser und/oder Aramidfaser oder dergleichen.

Ein weiterer Aspekt der vorliegenden Erfindung ist ein Ankerseilüberwachungssystem zum Überwachen des Zustands eines beanspruchten Ankerseilsystems.

Das Ankerseilüberwachungssystem weist mindestens eine mit dem mindestens einen Lichtwellenleiter des zu überwachenden Ankerseilsystems verbindbare Überwachungsvorrichtung auf. Die Überwachungsvorrichtung umfasst eine Auswerteeinrichtung. Die Auswerteeinrichtung ist eingerichtet zum Auswerten mindestens eines von dem Lichtwellenleiter empfangbaren Sensorsignals.

Insbesondere ist erkannt worden, dass durch eine Auswertung des von dem Lichtwellenleiter empfangbaren Sensorsignals auf den (augenblicklichen) mechanischen und/oder strukturellen Zustand des überwachten Ankerseils geschlossen werden kann. Beispielsweise kann basierend auf der Auswertung des Sensorsignals erkannt werden, ob das Ankerseilsystem mechanisch bzw. strukturell beeinträchtigt ist, beispielsweise ein Ankerseil einen oder mehrere (Micro-) Riss / e aufweist. Hierdurch kann frühzeitig eine Beschädigung des Ankerseilsystems erkannt und insbesondere Maßnahmen zur Behebung der Beschädigung des Ankerseilsystems eingeleitet werden, bevor es zu einer den Betrieb der Offshore-Vorrichtung beeinträchtigen Beschädigung des Ankerseilsystems, insbesondere einem Seilbruch, kommen kann.

Die Überwachungsvorrichtung kann vorzugsweise auf bzw. in der Offshore-Vorrichtung installiert sein. Die Auswertung kann insbesondere die Auswertung der Amplitude, Frequenz, Phase und dergleichen umfassen.

Gemäß einer ersten Ausführungsform des anmeldungsgemäßen Ankerseilüberwachungssystems kann die Auswerteeinrichtung eingerichtet sein zum Vergleichen des Sensorsignals mit mindestens einem Referenzkriterium. Beispielsweise kann das Referenzkriterium ein Grenzwert und/oder ein zulässiger Parameterbereich sein. Wird beispielsweise der durch mindestens einen Grenzwert definierbare zulässige Parameterbereich durch die aus dem Sensorsignal gewonnenen Parameterwerte überschritten, führt die Auswertung insbesondere zu einem Auswerteergebnis, dass der Zustand des Ankerseilsystems beeinträchtigt ist. Dies kann beispielsweise dann der Fall sein, wenn erfasste Ankerseilsystemvibrationen und/oder Schallemissionen außerhalb des zulässigen Vibrations- bzw, Schallbereichs liegen. Hierbei kann dann eine entsprechende Mitteilung/Nachricht über die detektierte Abweichung ausgegeben werden.

Vorzugsweise kann die Stärke bzw. Grad der Beeinträchtigung bzw. Beschädigung, beispielsweise aufgrund der bestimmten Diskrepanz zwischen dem mindestens einen gemessenen Parameterwert und einem Grenzwert, bestimmt werden. Wie ferner bereits beschrieben wurde, kann auch die Beschädigungsposition an dem Ankerseilsystem bestimmt werden.

Liegt hingegen der mindestens eine aus dem Sensorsignal gewonnene Parameterwert innerhalb des zulässigen Parameterbereichs, wird also beispielsweise der mindestens eine Grenzwert nicht überschritten, führt die Auswertung insbesondere zu dem Auswerteergebnis, dass der Zustand des Ankerseilsystems nicht beeinträchtigt ist. Dies kann beispielsweise dann der Fall sein, wenn erfasste Ankerseilsystemvibrationen innerhalb des zulässigen Vibrationsbereichs liegen.

Das Referenzkriterium kann beispielsweise fest vorgegeben sein und beispielsweise vorab durch Simulationen berechnet und/oder durch Tests ermittelt worden sein. Bevorzugt kann das mindestens eine Referenzkriterium, also insbesondere der mindestens eine (ortsabhängige) Grenzwert und/oder der mindestens eine (ortsabhängige) zulässige Parameterbereich, individuell für jedes Ankerseilsystem bestimmt sein. Gemäß einer besonders bevorzugten Ausführungsform kann das mindestens eine Referenzkriterium auf mindestens einem historischen Sensorsignal des zu überwachenden Ankerseilsystems basieren. Insbesondere ist erkannt worden, dass aufgrund der Fertigungstoleranzen, der Dimensionen eines Ankerseilsystems (insbesondere unterschiedliche Längen) und/oder der am Installationsort des Ankerseilsystems anzutreffenden Umgebungsbedingungen sich der tatsächlich zulässige (ortsabhängige) Parameterbereich (z.B. zulässige Stärke der Vibrationen) eines erstes Ankerseilsystems von dem tatsächlich zulässigen (ortsabhängigen) Parameterbereich eines weiteren Ankerseilsystems unterscheiden kann.

Um eine optimierte und für jedes Ankerseilsystem abhängig von den individuellen Eigenschaften des jeweiligen Ankerseilsystems und/oder den individuellen Umgebungseigenschaften des jeweiligen Installationsorts Überwachung zu ermöglichen, wird insbesondere vorgeschlagen, zunächst eine Mehrzahl von Sensorsignalen für jedes Ankerseilsystem nach der Installation aufzuzeichnen. Unter der Annahme, dass sich ein Ankerseilsystem (unmittelbar) nach der Installation in einem guten bzw. ordnungsgemäßen strukturellen Zustand, also beschädigungsfreien Zustand, befindet, kann vorzugsweise eine Mehrzahl Sensorsignal (die zu unterschiedlichen Zeitpunkten und für einen bestimmten Zeitraum (z.B. X Wochen, X Monate etc.) erfasst wurden) aufgezeichnet werden. Diese Sensorsignale können als zulässige Sensorsignale angesehen werden, so dass basierend auf diesen Sensorsignalen das mindestens eine Referenzkriterium bestimmt werden kann (z.B. durch Mittelung, Extremwertbildung etc.). Beispielsweise kann hierdurch für jedes Ankerseilsystem die maximal zulässige Vibrationsstärke und/oder Schallpegel ermittelt werden. Anschließend kann in einfacher und gleichzeitig zuverlässiger Weise durch eine Vergleichsoperation das Ankerseilsystem überwacht werden.

Das mindestens eine aufgezeichnete Sensorsignal und/oder das mindestens eine Referenzkriterium kann/können in einem Datenspeicher des Ankerseilüberwachungssystems gespeichert werden.

Gemäß einer weiteren Ausführungsform kann die Überwachungsvorrichtung mindestens einen Messsignalgenerator umfassen. Der Messsignalgenerator kann eingerichtet sein zum Einkoppeln eines optischen Messsignals in den Lichtwellenleiter des zu überwachenden Ankerseilsystems. Die Auswerteeinrichtung kann eingerichtet sein zum Empfangen und insbesondere Auswerten des in Reaktion auf das optische Messsignal in dem Lichtwellenleiter generierten Sensorsignals. Insbesondere kann die Auswertung auf dem Messsignal und dem Sensorsignal, welches das Messsignal bewirkt hat.

Wie bereits beschrieben wurde, kann die Überwachungsvorrichtung insbesondere nach dem OTDR Verfahren betrieben werden. Beispielsweise kann der Messsignalgenerator als Messsignal mindestens einen Lichtpuls, insbesondere Laserpuls, (mit einer Dauer zwischen z.B. 3 ns bis 20 µs) in den Lichtwellenleiter einkoppeln. Als Sensorsignal kann, insbesondere durch die Auswerteeinrichtung, das Rückstreulicht über der Zeit gemessen werden. Die Zeitabhängigkeit des Sensorsignals kann insbesondere in eine Ortsabhängigkeit umgerechnet werden, so dass eine ortsaufgelöste Bestimmung des mechanischen strukturellen Zustands des Ankerseilsystems (beispielsweise anhand der aus dem Messsignale gewonnenen Vibrationsdaten, Schalldaten etc.) erfolgen kann.

Gemäß einer weiteren Ausführungsform können vorzugsweise bei der Auswertung (augenblickliche) Umgebungsdaten (z.B. Wassertemperatur, Strömungsrichtung, Strömungsstärke, Wellenhöhe etc.) berücksichtigt werden. Die Umgebungsdaten können Einfluss auf das Sensorsignal haben, ohne dass sich der tatsächliche Zustand des Ankerseilsystems verändert hat. Indem bei der der Auswertung (augenblickliche) Umgebungsdaten (z.B. Wassertemperatur, Strömungsrichtung, Strömungsstärke, Wellenhöhe etc.) berücksichtigt werden, kann die Zuverlässigkeit der Überwachung verbessert werden.

Ein weiterer Aspekt der vorliegenden Erfindung ist ein Verfahren zum Betreiben eines beanspruchten Ankerseilüberwachungssystems.

Das Überwachungsverfahren umfasst:
- Bewirken eines Einkoppelns eines optischen Messsignals in mindestens einen Lichtwellenleiter eines zu überwachenden Ankerseilsystems,
- Auswerten mindestens eines empfangenen Sensorsignals von dem Lichtwellenleiter in Reaktion auf das eingekoppelte optische Messsignal,
- wobei das Auswerten das Bestimmen des Zustands des zu überwachenden Ankerseilsystems umfasst, basierend auf dem empfangenen Sensorsignal und auf mindestens einem Referenzkriterium.

Ein weiterer Aspekt der Erfindung ist ein Computerprogramm mit Instruktionen ausführbar auf einem Prozessor derart, dass ein Ankerseilüberwachungssystem gemäß dem beanspruchten Verfahren betrieben wird. Insbesondere können die Instruktionen auf einem Speichermedium gespeichert sein, welches von dem Prozessor auslesbar ist, um das oben beschriebene Verfahren durchzuführen.

Ein noch weiterer Aspekt der Erfindung ist eine Verwendung eines beanspruchten Ankerseilsystems zum Befestigen, insbesondere Verankern, einer Offshore-Vorrichtung, insbesondere einer Offshore-Windenergievorrichtung, an einem Unterwasserboden.

Die Merkmale der Ankerseilsysteme, Ankerseilüberwachungssysteme, Verfahren, Computerprogramme und Verwendungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Ankerseilsystem, das anmeldungsgemäße Ankerseilüberwachungssystem, das anmeldungsgemäße Verfahren, das anmeldungsgemäße Computerprogramm und die anmeldungsgemäße Verwendung eines Ankerseilsystems auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. Die Erfindung ist durch die beigefügten Ansprüche definiert. In der Zeichnung zeigt:
- Fig. 1: eine schematische Querschnittsansicht eines Ausführungsbeispiels eines Ankerseilsystems
- Fig. 2: eine schematische Querschnittsansicht eines weiteren Ausführungsbeispiels eines Ankerseilsystems gemäß der Erfindung,
- Fig. 3: eine schematische Ansicht eines Ausführungsbeispiels eines Ankerseilüberwachungssystems gemäß der Erfindung,
- Fig.4: eine schematische Ansicht einer Offshore-Vorrichtung mit einem Ausführungsbeispiels eines Ankerseilüberwachungssystems gemäß der Erfindung, und
- Fig. 5: ein Diagramm eines Ausführungsbeispiels eines Verfahrens gemäß der Erfindung.

In den Figuren werden für gleiche Elemente gleiche Bezugszeichen verwendet.

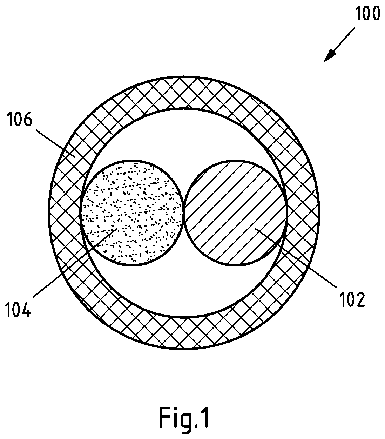

Die Figur 1 zeigt eine schematische Ansicht, insbesondere Querschnittsansicht, eines Ausführungsbeispiels eines Ankerseilsystems 100.

Das Ankerseilsystem 100 umfasst vorliegend ein Ankerseil 102 (z.B. aus Stahl), einen Lichtwellenleiter 104, der mindestens eine optische Faser aufweist, und eine das Ankerseil 102 und den Lichtwellenleiter 104 umschließende äußere Ummantelung 106 (z.B. aus einem Kunststoffmaterial).

Die Ummantelung 106 dient dem Schutz der durch die Ummantelung 106 umschlossenen Komponenten 102, 104. Das Ankerseil 102 dient im Wesentlichen dazu, die nach der Installation des Ankerseilsystems 102 auftretenden Kräfte aufzunehmen.

Insbesondere ist ein erstes Ende des Ankerseils 102 mit der vorzugsweise schwimmenden (aber im Betrieb im Wesentlichen stationären) Offshore-Vorrichtung und das weitere Ende mit einem am Unterwasserboden befestigten Ankerungsmittel (fest) verbunden. Hierdurch kann die schwimmende Offshore-Vorrichtung an dem Unterseeboden fest verankert werden.

Der Lichtwellenleiter 104 verläuft im Wesentlichen von dem ersten Ende des Ankerseils 102 zu dem weiteren Ende des Ankerseils 102. Der Lichtwellenleiter 104 ist als linienförmiger Zustandssensor 104 eingerichtet. Insbesondere kann durch die Nutzung des Lichtwellenleiters 104 der mechanische bzw. strukturelle Zustand des Ankerseilsystems 100, insbesondere des mindestens einen Ankerseils 102, überwacht werden.

Wie ferner in der Figur 1 zu erkennen ist, ist vorzugsweise der Lichtwellenleiter 104 unmittelbar benachbart zu mindestens einem Ankerseil 102 angeordnet, so dass dieses besonders zuverlässig überwacht werden kann.

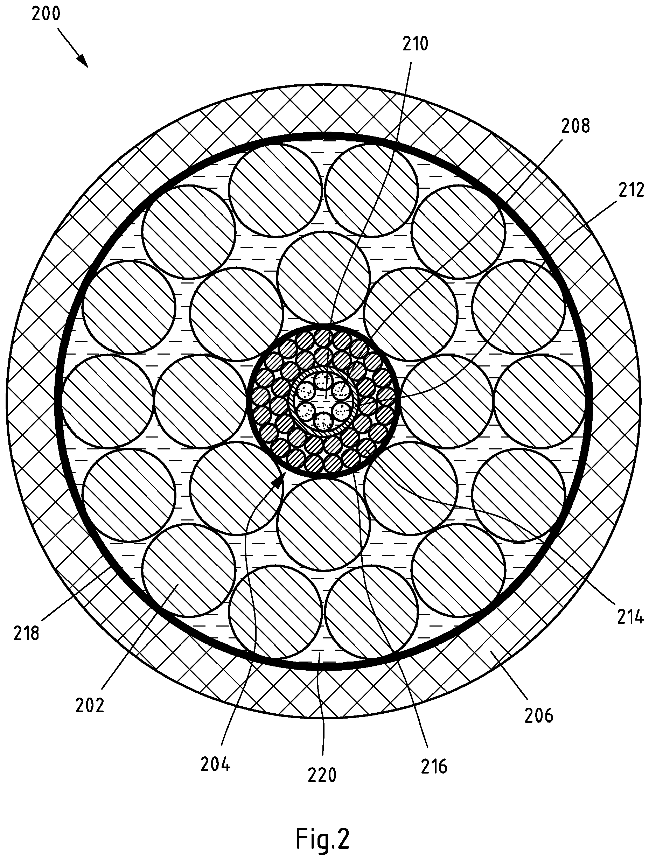

Die Figur 2 zeigt eine schematische Querschnittsansicht eines weiteren Ausführungsbeispiels eines Ankerseilsystems 200 gemäß der Erfindung.

Das dargestellte Ankerseilsystem 200 weist einen Lichtwellenleiter 204, eine Mehrzahl von Ankerseilen 202 und eine äußere Ummantelung 206 (z.B. aus einem Kunststoffmaterial) auf.

Ferner ist optional zwischen den Ankerseilen 204 und der Ummantelung 206 eine Barriereschutzschicht 218 angeordnet, insbesondere eine Sandschutzschicht 218. Diese dient insbesondere dem Schutz der Ankerseile 202.

Darüber hinaus kann das Ankerseilsystem 200 optional Füllmaterial 220 (auch fillers genannt) aufweisen. Insbesondere können in dem Ankerseilsystem 200 Hohlräume mit einem Füllmaterial 220 ausgefüllt sein, um eine im Wesentlichen kreisförmige Querschnittsform des länglichen Ankerseilsystems 200 bereitzustellen.

Wie zu erkennen ist, ist der Lichtwellenleiter 204 in der Mitte des Ankerseilsystems 200 angeordnet. Insbesondere bildet der Lichtwellenleiter 204 die Mittenachse des Ankerseilsystems 200. Um den Lichtwellenleiter 204 herum ist vorliegend eine Mehrzahl von Ankerseilen 202 unmittelbar angeordnet, insbesondere gewickelt.

Die Ankerseile 204 können vorzuweise zumindest teilweise aus Metall (z.B. Stahl) und zumindest teilweise aus einem Faserverbundwerkstoff (z.B. Kohlefaser) gebildet sein. Hierdurch können die positiven Eigenschaften der eingesetzten Materialien (hohe mechanische Festigkeit (Stahl), geringes Gewicht (Kohlefaser) etc.) kombiniert werden. Es versteht sich, dass bei anderen Varianten der Anmeldung sämtliche Ankerseile aus dem gleichen Material gebildet sein können.

Der Lichtwellenleiter 204 ist im vorliegenden bevorzugten Ausführungsbeispiel wie folgt gebildet:
Der Lichtwellenleiter 204 weist vorliegend eine Mehrzahl von optischen Fasern 208 auf. Die optischen Fasern 208 sind von einem Rohrelement 212 umgeben. Das Rohrelement 212 kann aus Metall und/oder mindestens einem Kunststoffmaterial gebildet sein. Das Rohrelement 212 dient insbesondere dem Schutz der innerhalb des Rohrelements 212 angeordneten optischen Fasern 208.

Um den Schutz noch weiter zu verbessern, ist eine Armierungsschicht 214, vorliegend gebildet aus zwei Sub-Armierungsschichten, jeweils aus einer Mehrzahl von Armierungsseilen, vorgesehen. Die Armierungsschicht 214 umgibt insbesondere unmittelbar das Rohrelement 212. Vorzugsweise kann eine erste Sub-Armierungsschicht (nur) aus Armierungsseilen gebildet sein, die aus Metall (z.B. Stahl) hergestellt sind, und die weitere Sub-Armierungsschicht (nur) aus Armierungsseilen gebildet sein, die aus einem Faserverbundwerkstoff (z.B. Kohlefaser) hergestellt sind. Wie oben beschrieben wurde, können hierdurch die positiven Eigenschaften der beiden eingesetzten Materialien in der Armierungsschicht kombiniert werden.

Es versteht sich, dass bei anderen Varianten der Anmeldung auch nur eine Sub-Schicht, mehr als zwei Sub-Schichten und/oder Armierungsseile aus einem (anderen) Material, beispielsweise sämtliche Armierungsseile aus dem gleichen Material, vorgesehen sein können.

Darüber hinaus ist das Rohrelement 212 mit einem viskoelastischen Fluid 210 gefüllt, beispielsweise einem Silikongel. Ferner weist der Lichtwellenleiter 204 vorliegend als äußere Schicht eine Kunststoffschicht 216 auf, insbesondere aus extrudiertem Kunststoff. Diese hat die Aufgabe, die anderen Komponenten 208 bis 214 des Lichtwellenleiters 204 zusammen zu halten.

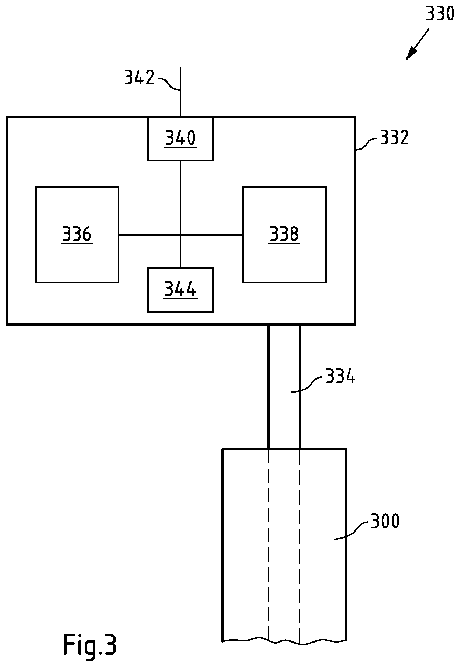

Die Figur 3 zeigt eine schematische Ansicht eines Ausführungsbeispiels eines Ankerseilüberwachungssystems 330 gemäß der vorliegenden Anmeldung auf. Das Ankerseilüberwachungssystem weist eine Überwachungsvorrichtung 332 auf, die bevorzugt an oder auf der schwimmenden Offshore-Vorrichtung installiert sein kann.

Die Überwachungsvorrichtung 332 kann zumindest teilweise durch Hardwaremittel und/oder zumindest teilweise durch Softwaremittel gebildet sein. Insbesondere ist die Überwachungsvorrichtung kommunikativ über einen Verbindungslichtwellenleiter 334 mit dem Lichtwellenleiter des Ankerseilsystems 300 verbunden.

Bei dem Ankerseilsystem 300 kann es sich vorzugsweise um ein Ankerseilsystem entsprechend dem Ausführungsbeispiel nach Figur 2 handeln. Der Verbindungslichtwellenleiter 334 kann zumindest durch eine verlängerte optische Faser des Lichtwellenleiters des Ankerseilsystems 300 gebildet sein.

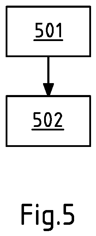

Die Überwachungsvorrichtung 332 weist im vorliegenden Ausführungsbeispiel eine Auswerteeinrichtung 338, einen Messsignalgenerator 344, einen Datenspeicher 336 und ein Kommunikationsmodul 340 auf. Die Funktionsweise der Überwachungsvorrichtung 332 wird nachfolgend mit Hilfe der Figur 5 näher beschrieben.

In einem ersten Schritt 501 wird, durch den Messsignalgenerator 344, ein Messsignal, vorzugsweise in Form von mindestens einem Licht-, insbesondere Laserpuls, generiert und in den Lichtwellenleiter, insbesondere die mindestens eine optische Faser des Lichtwellenleiters, des Ankerseilsystems 300 eingekoppelt. In Reaktion auf das Messsignal kann von dem Lichtwellenleiter des Ankerseilsystems 300, insbesondere durch die Auswerteeinrichtung 338 ein Sensorsignal, vorzugsweise in Form von zeitabhängigem Streulicht, empfangen werden.

Das empfangene Sensorsignal kann in Schritt 502 ausgewertet werden, insbesondere basierend auf mindestens einem Referenzkriterium, welches in dem Datenspeicher 336 gespeichert sein kann.

Beispielsweise kann bei der Auswertung das zeitabhängige Sensorsignal zunächst in ein ortsabhängiges Sensorsignal umgewandelt und dann mit einem ortsabhängigen Referenzkriterium verglichen werden, wobei das ortsabhängige Referenzkriterium insbesondere einen zulässigen ortsabhängigen Parameterbereich definieren kann.

Wird beispielsweise der durch mindestens einen Grenzwert definierbare zulässige Parameterbereich durch die aus dem Sensorsignal gewonnen Parameterwerte überschritten, führt die Auswertung insbesondere dazu, dass der strukturelle Zustand des Ankerseilsystems 300 als beeinträchtigt bewertet wird. Dann kann eine entsprechende Mitteilung/Nachricht durch das Kommunikationsmodul 340 über einen Kommunikationskanal 342 ausgegeben werden. Vorzugsweise kann hierbei die Stärke der Beeinträchtigung, beispielsweise aufgrund der bestimmten Diskrepanz des mindestens einen gemessenen Parameterwerts von einem Grenzwert, bestimmt werden.

Liegt hingegen der mindestens eine aus dem Sensorsignal gewonnene Parameterwert innerhalb des zulässigen Parameterbereichs, wird also beispielsweise der mindestens eine Grenzwert nicht überschritten, führt die Auswertung insbesondere dazu, dass der Zustand des Ankerseilsystems als nicht beeinträchtigt bewertet wird.

Besonders bevorzugt kann das mindestens eine Referenzkriterium auf mindestens einem, vorzugsweise einer Vielzahl von zuvor aufgezeichneten historischen Sensorsignalen des zu überwachenden Ankerseilsystems 300 basieren. Optional können bei der Auswertung Umgebungsdaten des überwachten Ankerseilsystems 300 (z.B. Wassertemperatur, Strömungsrichtung, Strömungsstärke, Wellenhöhe etc.) bei der Auswertung in Schritt 502 berücksichtigt werden.

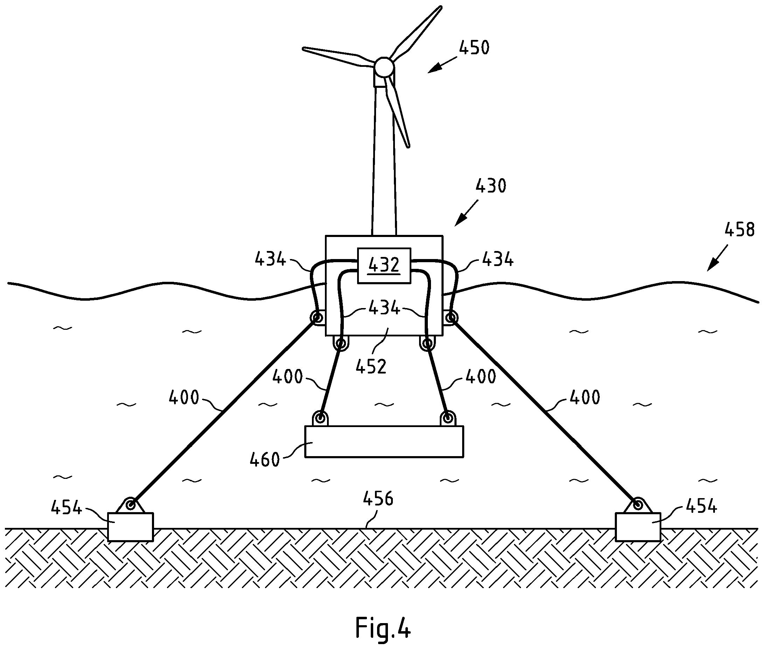

Die Figur 4 zeigt eine schematische Ansicht einer auf dem Wasser 458 angeordneten Offshore-Vorrichtung 450, die durch zwei Ankerseilsysteme 400 an dem Unterseeboden 456 befestigt, insbesondere verankert ist.

Die Offshore-Vorrichtung 450 ist insbesondere eine schwimmende Offshore-Windkraftanlage 450 mit einem Schwimmkörper 452, an dem jeweils ein Ende der Ankerseilsysteme 400 mechanisch befestigt ist. Ein Ankerseilsystem 400 kann insbesondere entsprechend dem Ausführungsbeispiel nach Figur 2 ausgebildet sein.

Das jeweilige andere Ende der Ankerseilsysteme 400 ist jeweils über einen Anker 454 an dem Unterseeboden 456 befestigt, insbesondere verankert. Es versteht sich, dass auch mehr als zwei Ankerseilsysteme 400 eingesetzt werden können.

Darüber hinaus ist ein Ankerseilüberwachungssystem 430 mit einer Überwachungsvorrichtung 432 vorgesehen, an dem die jeweilige Lichtwellenleiter der Ankerseilsysteme 400 über Verbindungslichtwellenleiter 434 gekoppelt sind. Die Überwachungsvorrichtung 432 kann ähnlich der Überwachungsvorrichtung nach Figur 3 gebildet sein. Die Funktionsweise des Ankerseilüberwachungssystems 430 kann in entsprechender Weise ähnlich zu der Funktionsweise des Ankerseilüberwachungssystems nach Figur 3 sein, so dass auf die vorherigen Ausführungen verwiesen wird.

Optional kann die Offshore-Vorrichtung 450 über mindestens ein Strukturelement 460 verfügen. Wie zu erkennen ist, ist das mindestens eine Strukturelement 460 über mindestens ein Ankerseilsystem 400 (vorliegend beispielhaft zwei Ankerseilsysteme) mit dem Schwimmkörper 452 der Offshore-Vorrichtung 450 verbunden. Das Strukturelement 460 kann in einer horizontalen Ebene ein Dreieck bilden, dessen (drei) Schenkel rohrförmig gebildet und über eine Vielzahl von Ankerseilsystemen 400 mit dem Schwimmkörper 452 verbunden sein können. Ein Ankerseilsystem 400 kann in zuvor beschriebener Weise überwacht werden. Ein solches Strukturelement 460 kann insbesondere ein Ballastkörper sein und vorzugsweise dazu dienen, die Stabilität der Offshore-Vorrichtung 450 zu verbessern. Insbesondere kann die aufrechte Schwimmlage der Offshore-Vorrichtung 450 während des Betriebs (mit einer höheren Sicherheit) beibehalten werden.

## Patentansprüche

1. Ankerseilsystem (100, 200, 300, 400) für eine Offshore-Vorrichtung (450), insbesondere zum Befestigen einer Offshore-Vorrichtung (450) an einem Unterwasserboden (456), umfassend:
- mindestens ein von mindestens einer Ummantelung (106, 206) umschlossenes Ankerseil (102, 202), und
- mindestens einen durch mindestens einen Lichtwellenleiter (104, 204) gebildeten Zustandssensor (104, 204),
- wobei der mindestens eine Lichtwellenleiter (104, 204) mindestens eine optische Faser (208) umfasst,
- wobei die mindestens eine optische Faser (208) in einem Rohrelement (212) des Lichtwellenleiters (104, 204) angeordnet ist,
- **dadurch gekennzeichnet, dass** der Lichtwellenleiter (104, 204) ein das Rohrelement (212) umschließende Armierungsschicht (214) umfasst,
- wobei die Armierungsschicht (214) eine Mehrzahl aus einem Faserverbundwerkstoff und/oder Metall gebildeten Armierungsseilen umfasst.

2. Ankerseilsystem (100, 200, 300, 400) nach Anspruch 1, **dadurch gekennzeichnet, dass**
- der Lichtwellenleiter (104, 204) in dem Ankerseilsystem (100, 200, 300, 400) benachbart zu dem Ankerseil (102, 202) angeordnet ist.

3. Ankerseilsystem (100, 200, 300, 400) nach Anspruch 1 oder 2, **dadurch gekennzeichnet, dass**
- das Ankerseilsystem (100, 200, 300, 400) eine im Wesentlichen kreisförmige Querschnittsfläche aufweist, und
- der mindestens eine Lichtwellenleiter (104, 204) in der Mitte der im Wesentlichen kreisförmigen Querschnittsfläche des Ankerseilsystems (100, 200, 300, 400) verläuft.

4. Ankerseilsystem (100, 200, 300, 400) nach einem der vorherigen Ansprüche,
**dadurch gekennzeichnet, dass**
- der mindestens eine Lichtwellenleiter (104, 204) mindestens zwei optische Fasern (208) umfasst.

5. Ankerseilsystem (100, 200, 300, 400) nach Anspruch 4, **dadurch gekennzeichnet, dass**
- in dem Rohrelement (212) des Lichtwellenleiters (104, 204) ein viskoelastisches Fluid (210) angeordnet ist.

6. Ankerseilüberwachungssystem (330, 430) zum Überwachen des Zustands eines Ankerseilsystems (100, 200, 300, 400) nach einem der vorherigen Ansprüche, umfassend:
- mindestens eine mit dem mindestens einen Lichtwellenleiter (104, 204) des zu überwachenden Ankerseilsystems (100, 200, 300, 400) verbindbare Überwachungsvorrichtung (332, 432),
- wobei die Überwachungsvorrichtung (332, 432) eine Auswerteeinrichtung (338) umfasst, eingerichtet zum Auswerten mindestens eines von dem Lichtwellenleiter (104, 204) empfangbaren Sensorsignals.

7. Ankerseilüberwachungssystem (330, 430) nach Anspruch 6, **dadurch gekennzeichnet, dass**
- die Auswerteeinrichtung (338) eingerichtet ist zum Vergleichen des empfangenen Sensorsignals mit mindestens einem Referenzkriterium,
- wobei das Referenzkriterium auf mindestens einem historischen Sensorsignal des zu überwachenden Ankerseilsystems (100, 200, 300, 400) basiert.

8. Verfahren zum Betreiben eines Ankerseilüberwachungssystems (330, 430) nach einem der vorherigen Ansprüche 6 bis 7, umfassend:
- Bewirken eines Einkoppelns eines optischen Messsignals in mindestens einen Lichtwellenleiter (104, 204) eines zu überwachenden Ankerseilsystems (100, 200, 300, 400),
- Auswerten mindestens eines empfangenen Sensorsignals von dem Lichtwellenleiter (104, 204) in Reaktion auf das eingekoppelte optische Messsignal,
- wobei das Auswerten das Bestimmen des Zustands des zu überwachenden Ankerseilsystems (100, 200, 300, 400) umfasst, basierend auf dem empfangenen Sensorsignal und auf mindestens einem Referenzkriterium.

9. Computerprogramm mit Instruktionen ausführbar auf einem Prozessor derart, dass ein Ankerseilüberwachungssystem (330, 430) gemäß dem Verfahren nach Anspruch 8 betrieben wird.

10. Verwendung eines Ankerseilsystems (100, 200, 300, 400) nach einem der Ansprüche 1 bis 5 zum Befestigen einer Offshore-Vorrichtung (450), insbesondere einer Offshore-Windenergievorrichtung (450), an einem Unterwasserboden (456).

## Claims

1. An anchor rope system (100, 200, 300, 400) for an offshore device (450), in particular, for fixing an offshore device (450) to a subsea floor (456), comprising:
- at least one anchor rope (102, 202) surrounded by at least one sheathing (106, 206), and
- at least one condition sensor (104, 204) formed by at least one fiber optic cable (104, 204),
- wherein the at least one fiber optic cable (104, 204) comprises at least one optical fiber (208),
- wherein the at least one optical fiber (208) is arranged in a tubular element (212) of the fiber optic cable (104, 204), **characterized in that**
- the fiber optic cable (104, 204) comprises an armoring layer (214) surrounding the tubular element (212),
- wherein the armoring layer (214) comprises a plurality of armoring ropes formed by a fiber composite material and/or metal.

2. The anchor rope system (100, 200, 300, 400) according to claim 1, **characterized in that**
- the fiber optic cable (104, 204) is arranged in the anchor rope system (100, 200, 300, 400) adjacent to the anchor rope (102, 202).

3. The anchor rope system (100, 200, 300, 400) according to claim 1 or 2, **characterized in that**
- the anchor rope system (100, 200, 300, 400) has a substantially circular cross-sectional area, and
- the at least one fiber optic cable (104, 204) extends in the center of the substantially circular cross-sectional area of the anchor rope system (100, 200, 300, 400).

4. The anchor rope system (100, 200, 300, 400) according to any one of the preceding claims, **characterized in that**
- the at least one fiber optic cable (104, 204) comprises at least two optical fibers (208).

5. The anchor rope system (100, 200, 300, 400) according to claim 4 or 5, **characterized in that**
- a viscoelastic fluid (210) is arranged in the tubular element (212) of fiber optic cable (104, 204).

6. An anchor rope monitoring system (330, 430) for monitoring the condition of an anchor rope system (100, 200, 300, 400) according to any one of the preceding claims, comprising:
- at least one monitoring device (332, 432) connectable to the at least one fiber optic cable (104, 204) of the anchor rope system (100, 200, 300, 400) to be monitored,
- wherein the monitoring device (332, 432) comprises an evaluation unit (338) configured to evaluate at least one sensor signal receivable by the fiber optic cable (104, 204).

7. The anchor rope monitoring system (330, 430) according to claim 6, **characterized in that**
- the evaluation unit (338) is configured to compare the received sensor signal with at least one reference criterion,
- wherein the reference criterion is based on at least one historical sensor signal of the anchor rope system (100, 200, 300, 400) to be monitored.

8. A method of operating an anchor rope monitoring system (330, 430) according to any of the previous claims 6 to 7, comprising:
- causing a coupling of an optical measurement signal into at least one fiber optic cable (104, 204) of an anchor rope system (100, 200, 300, 400) to be monitored,
- evaluating at least one received sensor signal from the fiber optic cable (104, 204) in response to the injected optical measurement signal,
- wherein the evaluating comprises determining the condition of the anchor rope system (100, 200, 300, 400) to be monitored based on the received sensor signal and on at least one reference criterion.

9. A computer program with instructions executable on a processor such that an anchor rope monitoring system (330, 430) is operated according to the method of claim 8.

10. Use of an anchor rope system (100, 200, 300, 400) according to any one of claims 1 to 5 for fixing an offshore device (450), in particular, an offshore wind energy device (450), to a subsea floor (456).

## Revendications

1. Système de câble d'ancrage (100, 200, 300, 400) pour un dispositif offshore (450), en particulier pour fixer un dispositif offshore (450) à un fond sous-marin (456), comprenant :
- au moins un câble d'ancrage (102, 202) entouré d'au moins une gaine (106, 206), et
- au moins un capteur d'état (104, 204) formé par au moins une guide d'onde optique (104, 204),
- où le au moins un guide d'onde optique (104, 204) comprend au moins une fibre optique (208),
- où l'au moins une fibre optique (208) est disposée dans un élément de tube (212) du guide d'onde optique (104, 204), **caractérisé en ce que**
- le guide d'onde optique (104, 204) comprend une couche d'armature (214) entourant l'élément de tube (212),
- où la couche d'armature (214) comprend une pluralité de câbles d'armature formés d'un matériau composite fibreux et/ou de métal.

2. Système de câble d'ancrage (100, 200, 300, 400) selon la revendication 1, **caractérisé en ce**
- **que** le guide d'onde optique (104, 204) est disposé dans le système de câble d'ancrage (100, 200, 300, 400) de manière adjacente au câble d'ancrage (102, 202).

3. Système de câble d'ancrage (100, 200, 300, 400) selon la revendication 1 ou 2, **caractérisé en ce que**
- le système de câble d'ancrage (100, 200, 300, 400) a une surface de section transversale essentiellement circulaire, et
- le ou les guides d'ondes optiques (104, 204) s'étendent au centre de la surface de section transversale essentiellement circulaire du système de câble d'ancrage (100, 200, 300, 400).

4. Système de câble d'ancrage (100, 200, 300, 400) selon l'une des revendications précédentes, **caractérisé en ce que**
- l'au moins un guide d'onde optique (104, 204) comprend au moins deux fibres optiques (208).

5. Système de câble d'ancrage (100, 200, 300, 400) selon la revendication 4, **caractérisé en ce que**
- un fluide viscoélastique (210) est disposé dans l'élément de tube (212) du guide d'onde optique (104, 204).

6. Système de surveillance de câble d'ancrage (330, 430) pour surveiller l'état d'un système de câble d'ancrage (100, 200, 300, 400) selon l'une des revendications précédentes, comprenant :
- au moins un dispositif de surveillance (332, 432) reliable à l'au moins un guide d'onde optique (104, 204) du système de câble d'ancrage (100, 200, 300, 400) à surveiller,
- où le dispositif de surveillance (332, 432) comprend un dispositif d'évaluation (338), configuré pour évaluer au moins un signal de capteur recevable par le guide d'onde optique (104, 204).

7. Système de surveillance de câble d'ancrage (330, 430) selon la revendication 6, **caractérisé en ce que**
- le dispositif d'évaluation (338) est configuré pour comparer le signal de capteur reçu avec au moins un critère de référence,
- où le critère de référence est basé sur au moins un signal de capteur historique du système de câble d'ancrage (100, 200, 300, 400) à surveiller.

8. Procédé d'exploitation d'un système de surveillance de câble d'ancrage (330, 430) selon l'une des revendications 6 à 7 précédentes, comprenant :
- réaliser une injection d'un signal de mesure optique dans au moins un guide d'onde optique (104, 204) d'un système de câble d'ancrage (100, 200, 300, 400) à surveiller,
- évaluer au moins un signal de capteur reçu en provenance du guide d'onde optique (104, 204) en réponse au signal de mesure optique injecté,
- où l'évaluation comprend la détermination de l'état du système de câble d'ancrage (100, 200, 300, 400) à surveiller, sur la base du signal de capteur reçu et d'au moins un critère de référence.

9. Programme informatique comprenant des instructions exécutables sur un processeur de telle sorte qu'un système de surveillance de câble d'ancrage (330, 430) est exploité selon le procédé de la revendication 8.

10. Utilisation d'un système de câble d'ancrage (100, 200, 300, 400) selon l'une des revendications 1 à 5 pour fixer un dispositif offshore (450), notamment un dispositif d'énergie éolienne offshore (450), à un fond sous-marin (456).
